# EUROPEAN PATENT SPECIFICATION

(11) **EP 3 635 942 B1**
(45) Date of publication and mention of the grant of the patent: **04.10.2023**
(21) Application number: 17746537.4
(22) Date of filing: 08.06.2017
(51) Int. Cl.: H04L 67/125, H04L 67/025, H04W 4/70, G06Q 50/06, G06Q 20/14, G06Q 20/16, G06Q 20/08, G06Q 20/32, C02F 1/00, H04L 12/28

(54) **WATER DISTRIBUTOR AND CONTROL SYSTEM BASED ON WIRELESS TECHNOLOGY**
WASSERVERTEILER UND STEUERUNGSSYSTEM AUF BASIS VON DRAHTLOSER TECHNOLOGIE
SYSTÈME DE COMMANDE ET DE DISTRIBUTION D'EAU BASÉ SUR UNE TECHNOLOGIE SANS FIL

(30) Priority: 06.06.2017 IT 201700061867
(43) Date of publication of application: 15.04.2020
(73) Proprietor: SOPRANO Srl, 35030 Saccolongo (PD) (IT)
(72) Inventor: CARPANESE, Fabio, 35030 Selvazzano Dentro (PD) (IT)
(74) Representative: Vinci, Marcello
(86) International application number: PCT/IB2017/053387
(87) International publication number: WO 2018/224864

(56) References cited:
- EP-A1- 2 667 576
- CN-A- 105 527 905
- CN-U- 204 839 130
- CN-U- 204 970 885
- CN-U- 205 656 749
- CN-U- 205 994 298
- US-A1- 2013 226 752
- US-A1- 2014 222 634

## Description

### TECHNICAL SCOPE

This patent refers to the sphere of household appliances, particularly the field of water purifying and filtering equipment (for domestic and non-domestic use).

This patent also refers to the sphere of systems or devices that carry out wireless communications and which have the scope of improving people's quality of life and promoting energy savings.

### STATE OF THE ART

It is known that the water from the public water supply network is drinkable and carefully controlled and does not need to be treated, chlorinated or filtered. Nonetheless, there are some conditions that could lower its quality, such as the status of the piping of buildings that take the water to the tap (e.g. materials used for pipe joints, lack of cleaning, corrosion, etc.) including technical interventions on it. There are already many types of water purification systems on the market, including, for example, systems using carbon dioxide as an additive or active carbon filter devices, magnetic purification devices, or electrolysis-based devices. These water purifiers are used in all sectors: offices, shops, gyms, hotels, restaurants, residential buildings, etc. To date, various utility models have been studied and patented describing many types of water dispensers and their control systems, even if based on different methodologies and intended uses. Some are able to purify water, others to evaluate its temperature or quality, others can also be equipped with automatic systems and/or be remotely controlled through different communication systems (Bluetooth^{®}, Wi-Fi, GPRS , etc). The Chinese utility CN204839172 (U), published on 09/12/2015, describes a water dispenser control system. The system comprises a main control device with which it connects: the power unit of the control system, used for power supply; the heating unit, used to increase the temperature; the cooling unit, to be used to decrease the temperature; the water pump unit used to pump the water out. The system has a Bluetooth^{®} unit, connected to the main control device, which is used for the Bluetooth^{®} transmission and therefore for the connection with external terminals, such as smartphones and computers, through which it is possible to control the operating status of the water dispenser. In this way, office staff can quickly check when the water dispenser is usable. Additionally, the water production detection unit and the temperature sensing unit send the water dispenser data to the external terminal in real time.

The Chinese utility model CN204797595 (U), published on 25/11/2015, describes a water dispenser with multimedia function on a network. The system includes: the water dispenser housing; a container that is installed at the top of the water dispenser container; a container of powdered beverages; a heating device and a water storage compartment, which are installed inside the water dispenser casing; a multimedia screen and a water switch that are installed on the right side of the water dispenser casing; a switch that is installed on the left side of the water dispenser casing. The multimedia features of the dispenser consist of a flat screen (called multimedia interactive screen) able to connect to a remote server via LAN, Wi-Fi, 3G, 4G. The system enables programs to be downloaded and e-commerce and online payment transactions to be made. The network-based multimedia feature can be used as a hot spot, covering about 30 square yards with Wi-Fi, Bluetooth^{®}, and other technologies, for smartphones, Tablets, and PCs, within the coverage area.

Chinese patent CN105030063 (U), published on 11/11/2015, describes an instant heating-type intelligent water dispenser, based on Bluetooth^{®} control and its control method. The water dispenser system includes multiple intelligent terminals, which in turn include electronic devices with APPs installed. The intelligent terminals are used to send instructions to a control module of the water dispenser and display information on the current state of the water dispenser so as to remind a user to drink water. The intelligent water dispenser comprises a control module, a temperature acquisition module, a temperature display module, a flow rate adjusting module, a heating module and detection module used to receive instructions regarding water temperature and water volume sent by the intelligent terminals, which enables it to heat the water up to the required temperature. If the temperature is not reached the water is not supplied. The water dispenser is used to send information to the intelligent terminals. The communication of the system is based on Bluetooth^{®} technology and the system is designed for energy savings.

Chinese patent CN104921599 (A), published on 23/09/2015, describes an intelligent water dispenser system based on Wi-Fi and multimedia. The system includes: a dispenser, a screen, a monitor, a Wi-Fi module, a control module, and a multimedia module. The monitor, screen and Wi-Fi module are located on the body of the water dispenser. The system described can be managed either from a local network or from a "cloud" and can be easily used.

EP 2 667 576 A1, CN 204 839 130 U, CN 204 970 885 U, US 2013/226752 A1, CN 205 994 298 U and CN 205 656 749 U represent further relevant prior art in the field.

### TECHNICAL PROBLEM TO BE RESOLVED

With regard to the state of the art and the solutions available on the market, the following technical issues have been identified:
- The market offers a significant number of water dispenser solutions, some of which allow water purification and allow remote control through different communication technologies (Bluetooth^{®}, Wi-Fi, GPRS, etc.). However, the market does not offer systems that contribute to energy saving and at the same time implement functions related to the water dispenser, the protection of the health of users, and possible services offered by service providers.

There is a need for a water dispenser and a related wireless-based control system able to save energy (e.g. by adjusting performance according to user habits) and at the same time implement functions related to the water dispenser, the health of the user (e.g. by recommending a proper daily water intake), and to promote possible services provided by the water dispenser operators/service providers.
- With reference to the Chinese utility model CN204839172 (U), published on 09/12/2015, the water dispenser control system as described uses a Bluetooth^{®} connection to send real-time data to external terminals (e.g., smartphones, computers, etc.), but does not implement functions related to the health of the user.
- With reference to the Chinese utility model CN204797595 (U), published on 25/11/2015, the described water distributor can connect to a remote server via LAN, Wi-Fi, 3G and 4G and has a multimedia function. The system allows programs to be downloaded and e-commerce and online payment transactions to be made, but does not allow the implementation of functions related to the user's health.
- With reference to Chinese patent CN105030063 (U), published on 11/11/2015, the water dispenser described is based on a Bluetooth^{®} control system and includes multiple terminals with APPs installed, it also implements functions related to human health and energy savings. However, the system does not implement functions related to a possible operator/service provider.
- With reference to Chinese patent CN104921599 (A) published on 23/09/2015, the described water dispenser system is based only on Wi-Fi connection and does not provide a Bluetooth^{®} connection to cover short distances. The system also does not include energy saving functions and does not allow the implementation of functions related to the health of the users and/or other possible operators/service provider.

### DESCRIPTION OF THE INVENTION

The present invention consists of a water distribution system, equipped with a water dispenser, and a control system based on wireless technology both for home and corporate environments according to appended independent claim 1.

The new system comprises:
a) at least one water dispenser, or at least one drinking water dispenser, directly or indirectly connected to the water supply network, equipped with a water filtration system to remove impurities, odors, and pollutants. In addition to implementing the filtration process, the water dispenser provides for the heating or cooling of the water supplied;
b) this filtration system in turn comprises one or more suitable filters connected to the water supply network and the water dispenser in question to filter the inbound water from the water supply network in order to eliminate any pollutants/contaminants in the drinking water flowing through the pipes (pesticides, chlorine, bacteria, fungus, heavy metals, etc.), without altering the natural properties of the water (mineral salts). These filters should be replaced after reaching their saturation threshold. They are easily replaceable even by an average user;
c) one or more mobile terminals, namely smartphones, handheld devices, tablets, laptops, MP3 players, GPS receivers, etc., through which a connected user can display the dispenser's parameters and send any related commands;
d) a "software" application or application installed in the aforementioned one or more mobile terminals (smartphones, tablets, etc.) able to perform multiple functions related to:
   - *the operation of the water dispenser*: activation/deactivation of the dispenser; alarms and/or fault signals and/or signals to replace consumables (filters: CO2 cylinders, etc.) that are automatically sent to the operators/service providers;
   - *user's health*: monitoring by each individual user of the amount of water consumed during the day or within a given time period; special alarms and/or signals to suggest or remind users of the need to drink during the day in order to help the user maintain proper body hydration; a user hydration profile suited to his/her needs also based on physical activity or possible pathologies. The application installed on mobile devices can also connect or synchronize with other applications dedicated to physical activities, in order to calculate and recommend the quantity of water necessary based on the information provided.
   - *services intended for the water dispenser providers*: processing of payments made by users; control and display of consumption parameters (and all other available data) and of the payment of fees and any activation/deactivation of the water dispenser in relation to payment of the fees to any service provider;
e) wireless connecting devices to enable the communication with the water dispenser through a special software application with one or more active mobile terminals within a certain range. If the range of the wireless transmission is less than 8-10 meters, a Bluetooth^{®} connection is used; if the distance is greater than 8-10 meters, the system can be connected to a Wi-Fi network;
f) a database on an external server or "cloud", if the system is connected to a Wi-Fi network (in turn connected to the Internet) that enables the storage, processing, and transmission of all relevant data;
g) possible service providers.

The water dispenser can be connected with the outside (wireless connection: Bluetooth^{®} or Wi-Fi depending on the range) using mobile terminals of users that have the aforementioned special application installed.

The water dispenser by receiving Bluetooth^{®} signals from the different mobile devices within the coverage range, and based on the users' habits, may increase or decrease its performance, especially as relates to the hot water function that it is usually kept on despite its usually limited use even though it has very high energy consumption, thereby contributing significantly to energy savings.

In order to benefit from the service provided by the water dispenser and the associated monitoring and control system, the user must purchase the service or must pay a fee or a leasing fee depending of the contractual terms. If the water dispenser is leased or supplied under a loan for use contract, the dispenser provider are able to remotely connect and monitor all available data using either an enabled terminal or mobile device with the relevant application installed within the 8-10 meter range or by using a "cloud" database through an internet connection (even if outside the aforementioned 8 to 10 meter range). Service providers can also enable or disable the dispenser in connection with the payment of the fee or lease fee. When the system does not detect any Bluetooth^{®} connection for a pre-established amount of time it automatically disables the dispensing feature to prevent use without payment of the lease fee or service fee.

### ADVANTAGES OF THE INVENTION

The water dispenser and its wireless technology-based monitoring and control system, which is the object of this utility model, offers advantages over all of the aforementioned problematic aspects of the prior art:
- The solution described can increase or decrease its performance (especially for hot water) based on user habits, contributing significantly to energy savings.
- This solution helps improve the quality of life of people, with particular attention to health care. In particular it allows a user to maintain proper body hydration.
- The solution described enables tap water to be converted instantly to natural spring water. The system allows users to obtain healthy drinks, eliminating the problems resulting from the piping that conducts water to the tap (materials used for pipe joints, cleaning problems, corrosion, etc.). The filtration system ensures the removal of all contamination and impurities from the water, leaving it pure with essential minerals for healthy consumption.
- The solution described is able to provide both hot and cold purified water on request. The system eliminates boiling time (since it is able to reach a suitable temperature to prepare hot drinks) or refrigeration (temperature suitable for refrigerated drinks).
- The solution described is economical, easy to install, and easy to use.
- The use of Bluetooth^{®} technology within the range of 8-10 m enables a dedicated connection to be avoided and therefore reduces costs and simplifies use and installation.
- The proposed solution is versatile: the system is adaptable to any type of environment.
- The system is simple in structure and easy to obtain since the components are all commercially available.
- The system facilitates savings, especially considering a long-term time span, and requires virtually no maintenance.
- The system is convenient since it is possible to have natural spring water without having to store bulky and heavy bottles.

### BRIEF DESCRIPTION OF THE DRAWINGS

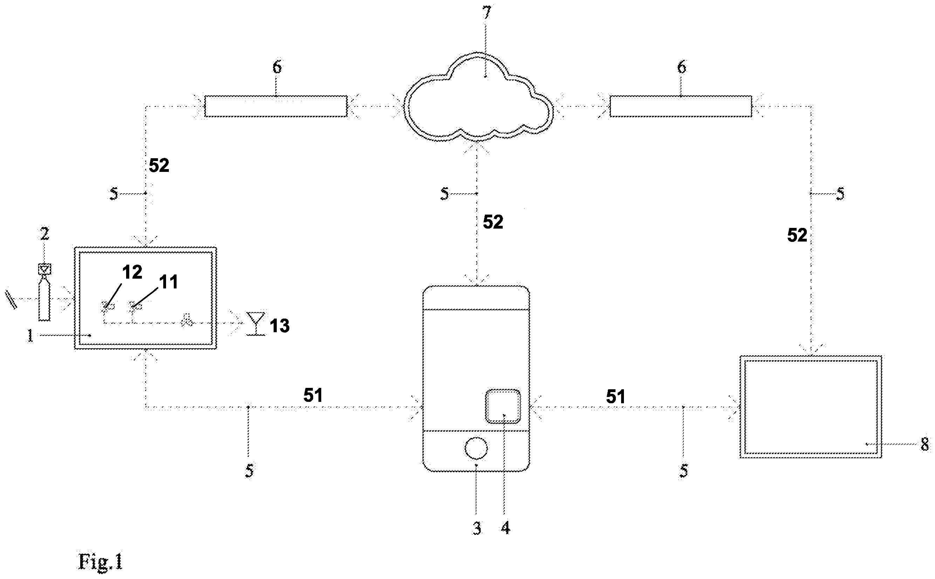

Figure 1 shows the water distribution system comprising a dispenser or distributor or water dispenser 1 and its wireless technology monitoring and control system for domestic and/or corporate and/or other uses, as contemplated by the present invention.

### DETAILED DESCRIPTION

In particular, Figure 1 shows the components of the new water distribution system.

A water dispenser 1, that is, a drinking water dispenser, is connected to the water supply network 10, which implements a filtration process and is combined with a heating or cooling effect of the water. For example, the dispenser 1 comprises means for heating water 11 and/or means for cooling water 12.

Suitable filters 2 (e.g., CO2 cylinders) are installed upstream of the water dispenser connected between the water supply network 10 and the water dispenser 1, which is able to eliminate any pollutant/contaminant in the drinking water (chlorine, bacteria, heavy metals, etc.), without altering the natural properties of the water (mineral salts). After filtering and possibly altering the water temperature, the dispenser 1 dispenses the water 13.

The system also comprises one or more terminals or mobile devices 3, including handhelds, smartphones, tablets, etc. which enable a connected user to view dispenser 1 parameters and provide any commands.

At least one suitable software program or application 4 which has multiple functions related to the operation of the water dispenser 1, the health of the user, and any service offered by the service providers is installed on these one or more terminals or devices 3.

This dispenser or water dispenser comprises at least one wireless connection module 5 which puts the water dispenser 1 in communication with the active terminals 3 in the range through the special application 4.

The connection will be Bluetooth^{®} 51 if the range is less than 8-10 meters, and will be Wi-Fi 52 if the range is greater than 8-10 meters.

The system also uses an internet network 6 connection and comprises a database on a remote server or "cloud" 7.

If the system is connected to a Wi-Fi network 5, which is in turn connected to the internet network 6, the "cloud" 7 can be used to store, process, and transmit data.

The system may further comprise one or more terminals of any service providers 8, if the system is leased or supplied under a loaned for use contract, which can connect remotely by using as a connection interface a mobile device 3 active within the range of 8-10 meters of a user who has installed the special application 4, or using a cloud 7 database in the case of a larger distance.

These specifications are sufficient for the expert person to make and use the invention, as a result, in the practical application there may be variations without prejudice to the substance of the innovative concept.

Therefore, with reference to the preceding description and the attached drawings the following claims are made.

## Claims

1. Water distribution and dispensing system for domestic and/or corporate use and/or other uses, comprising at least one water dispenser (1) and a relative monitoring and control system comprising :
a) said at least one water dispenser (1) or drinking water dispenser comprising means to connect to a water supply network (10);
b) one or more mobile electronic terminals (3) and at least one user or service provider; wherein said one or more mobile terminals (3) are configured to receive data relating to the operation of said dispenser from said dispenser (1)
c) at least one application (4) installed in said one or more mobile terminals (3);
d) means or modules for wireless connection (5) between said at least one dispenser (1) and said one or more mobile terminals (3);
wherein said one or more mobile terminals (3) are configured to send control commands to said dispenser (1) and the system is **characterized in that** said system also comprises.
- one or more filters (2) installed between said water supply network (10) and said dispenser (1) and able to filter the water flowing from said water supply network (10),
- one or more terminals of the service providers (8) comprising means to connect to one or more of said mobile terminals (3)
and wherein said at least one application (4) installed in said one or more mobile terminals (3):
is configured to activate/deactivate the dispenser (1) and/or to signal the dispenser (1) status and/or to signal the need for the replacement of consumables;
- is configured to monitor/log the amount of water consumed by each individual user during the day or within a given time period and/or to report a user's water consumption;
- is configured to be used by the user to pay for the service, fee, or lease fee and/or by one or more service providers (8) to monitor and control usage/consumption and payment parameters;
and wherein if the distance between a mobile terminal of said one or more mobile terminals (3) and said dispenser (1) or the distance between a terminal of said one or more terminals of said service provider (8) and said mobile terminal (3) is less than 8-10 meters a Bluetooth connection (51) is used, while if the range is greater than 8-10 meters, the system is configured to connect through a Wi-Fi network (52).

2. System according to claim 1, **characterized in that** it also comprises at least one remote server or "cloud" (7) and means for connecting said one or more mobile terminals (3) and said cloud (7) through at least one internet network (6), and where said cloud (7) is configured to archive, process, and transmit data.

3. System according to one or more of the preceding claims, **characterized in that** said one or more filters (2) are configured to filter pollutants/contaminants such as chlorine, bacteria, heavy metals but not mineral salts.

4. System according to one or more of the preceding claims, **characterized in that** said one or more mobile terminals (3) comprise handheld devices, smartphones, tablets, etc.

5. System according to claim 1, **characterized in that** it comprises heating means (12) and/or cooling means (11) of the water installed in said dispenser (1), and wherein the operation of said heating means (12) and/or cooling means (11) is a function of the signals received by said one or more mobile terminals (3) which are present within the range of operation and depending on the user data.

## Patentansprüche

1. Wasserverteilungs- und -spendesystem für den privaten und/oder gewerblichen Gebrauch und/oder andere Verwendungszwecke, umfassend mindestens einen Wasserspender (1) und ein entsprechendes Überwachungs- und Steuersystem, umfassend:
a) den besagten mindestens einen Wasserspender (1) oder Trinkwasserspender einschließlich der Mittel zum Anschluss an ein Wasserversorgungsnetz (10);
b) ein oder mehrere mobile elektronische Endgeräte (3) und mindestens eine Benutzereinheit oder einen Dienstanbieter; wobei das besagte eine oder die besagten mehreren mobile Endgeräte (3) so konfiguriert sind, dass sie Daten bezüglich des Betriebs des besagten Spenders von dem besagten Spender (1) empfangen;
c) mindestens ein Anwendungsprogramm (4), das auf dem besagten einen oder den besagten mehreren mobilen Endgeräten (3) installiert ist;
d) Mittel oder Module zur drahtlosen Verbindung (5) zwischen dem besagten mindestens einen Spender (1) und dem besagten einen oder den besagten mehreren mobilen Endgeräten (3);
wobei:
das besagte eine oder die besagten mehreren mobilen Endgeräte (3) so konfiguriert sind, dass sie Steuerbefehle an den besagten Spender (1) senden, und das System **dadurch gekennzeichnet ist, dass** das besagte System außerdem umfasst:
- einen oder mehrere Filter (2), die zwischen dem besagten Wasserversorgungsnetz (10) und dem besagten Spender (1) installiert sind und das aus dem besagten Wasserversorgungsnetz (10) fließende Wasser filtern können,
- ein oder mehrere Endgeräte der Dienstanbieter (8) mit Mitteln zur Verbindung mit einem oder mehreren der besagten mobilen Endgeräte (3),
und wobei das auf dem besagten einen oder den besagten mehreren mobilen Endgeräten (3) installierte besagte mindestens ein Anwendungsprogramm (4):
- so konfiguriert ist, dass es den Spender (1) aktiviert/deaktiviert und/oder den Status des Spenders (1) signalisiert und/oder die Notwendigkeit des Austauschs von Verbrauchsmaterialien anzeigt;
- so konfiguriert ist, dass es die von jedem einzelnen Benutzer während des Tages oder innerhalb eines bestimmten Zeitraums verbrauchte Wassermenge überwacht/protokolliert und/oder den Wasserverbrauch eines Benutzers meldet;
- so konfiguriert ist, dass es vom Benutzer zur Bezahlung des Dienstes, der Gebühr oder der Mietgebühr und/oder von einem oder mehreren Dienstanbietern (8) zur Überwachung und Kontrolle der Nutzung/des Verbrauchs und der Zahlungsparameter verwendet wird;
und wobei, wenn der Abstand zwischen einem mobilen Endgerät des besagten einen oder der besagten mehreren mobilen Endgeräte und dem besagten Spender (1) oder der Abstand zwischen einem Endgerät des besagten einen oder der besagten mehreren Endgeräte des besagten Dienstanbieters (8) und dem besagten mobilen Endgerät (3) weniger als 8-10 Meter beträgt, eine Bluetooth-Verbindung (51) verwendet wird, während, wenn die Reichweite größer als 8-10 Meter ist, das System so konfiguriert ist, dass es über ein Wi-Fi-Netzwerk (52) verbunden wird.

2. System nach Patentanspruch 1, **dadurch gekennzeichnet, dass** es auch mindestens einen entfernten Server oder eine "Cloud" (7) und Mittel zum Verbinden des besagten einen oder der besagten mehreren mobilen Endgeräte (3) und der besagten Cloud (7) über mindestens ein Internet-Netzwerk (6) umfasst, und wobei die besagte Cloud (7) zum Archivieren, Verarbeiten und Übertragen von Daten konfiguriert ist.

3. System nach einem oder mehreren der vorhergehenden Patentansprüche, **dadurch gekennzeichnet, dass** der besagte eine oder die besagten mehreren Filter (2) so konfiguriert sind, dass sie Schadstoffe/Verunreinigungen wie Chlor, Bakterien, Schwermetalle, aber keine Mineralsalze filtern.

4. System nach einem oder mehreren der vorhergehenden Patentansprüche, **dadurch gekennzeichnet, dass** das besagte eine oder die besagten mehreren mobilen Endgeräte (3) Handheld-Geräte, Smartphones, Tablets usw. umfassen.

5. System nach Patentanspruch 1, **dadurch gekennzeichnet, dass** es Heizmittel (12) und/oder Kühlmittel (11) für das Wasser umfasst, die in dem besagten Spender (1) installiert sind, und wobei der Betrieb der besagten Heizmittel (12) und/oder Kühlmittel (11) eine Funktion der Signale ist, die von dem besagten einen oder den besagten mehreren mobilen Endgeräten (3) empfangen werden, die sich im Betriebsbereich befinden und in Abhängigkeit der Benutzerdaten arbeiten.

## Revendications

1. Système de distribution et de distribution d'eau à usage domestique et/ou professionnel et/ou autres usages, comprenant au moins un distributeur d'eau (1) et un système de surveillance et de contrôle correspondant comprenant :
a) ledit au moins un distributeur d'eau (1) ou distributeur d'eau potable comprend des moyens de connexion à un réseau d'alimentation en eau (10) ;
b) un ou plusieurs terminaux électroniques mobiles (3) et au moins un utilisateur ou un fournisseur de services ; où lesdits un ou plusieurs terminaux mobiles (3) sont configurés pour recevoir des données relatives au fonctionnement dudit distributeur depuis ledit distributeur (1) ;
c) au moins une application (4) installée dans lesdits un ou plusieurs terminaux mobiles (3) ;
d) moyens ou modules de connexion sans fil (5) entre ledit au moins un distributeur (1) et lesdits un ou plusieurs terminaux mobiles (3) ;
où
lesdits un ou plusieurs terminaux mobiles (3) sont configurés pour envoyer des commandes de contrôle audit distributeur (1) et le système est **caractérisé en ce que** ledit système comprend également :
- un ou plusieurs filtres (2) installés entre ledit réseau d'alimentation en eau (10) et ledit distributeur (1) et capables de filtrer l'eau s'écoulant dudit réseau d'alimentation en eau (10),
- un ou plusieurs terminaux des fournisseurs de services (8) comprenant des moyens pour se connecter à un ou plusieurs desdits terminaux mobiles (3),
et où ladite au moins une application (4) installée dans lesdits un ou plusieurs terminaux mobiles (3) :
- est configurée pour activer/désactiver le distributeur (1) et/ou pour signaler l'état du distributeur (1) et/ou pour signaler la nécessité de remplacer les consommables ;
- est configurée pour surveiller/enregistrer la quantité d'eau consommée par chaque utilisateur au cours de la journée ou d'une période donnée et/ou pour signaler la consommation d'eau d'un utilisateur ;
- est configurée pour être utilisé par l'utilisateur afin de payer le service, la redevance ou le droit de location et/ou par un ou plusieurs fournisseurs de services (8) afin de surveiller et de contrôler l'utilisation/la consommation et les paramètres de paiement ;
et où, si la distance entre un terminal mobile desdits un ou plusieurs terminaux mobiles et ledit distributeur (1) ou la distance entre un terminal desdits un ou plusieurs terminaux dudit fournisseur de services (8) et ledit terminal mobile (3) est inférieure à 8-10 mètres, une connexion Bluetooth (51) est utilisée, tandis que si l'intervalle est supérieur à 8-10 mètres, le système est configuré pour se connecter par l'intermédiaire d'un réseau Wi-Fi (52).

2. Système selon la revendication 1, **caractérisé en ce qu'**il comprend également au moins un serveur à distance ou "nuage" (7) et des moyens pour connecter lesdits un ou plusieurs terminaux mobiles (3) et ledit nuage (7) à travers au moins un réseau internet (6), et où ledit nuage (7) est configuré pour archiver, traiter et transmettre des données.

3. Système selon l'une ou plusieurs des revendications précédentes, **caractérisé en ce que** ce lesdits un ou plusieurs filtres (2) sont configurés pour filtrer des polluants/contaminants tels que le chlore, les bactéries, les métaux lourds mais pas les sels minéraux.

4. Système selon l'une ou plusieurs des revendications précédentes, **caractérisé en ce que** lesdits un ou plusieurs terminaux mobiles (3) comprennent des appareils portatifs, des smartphones, des tablettes, etc.

5. Système selon la revendication 1, **caractérisé en ce qu'**il comprend des moyens de chauffage (12) et/ou de refroidissement (11) de l'eau installée dans ledit distributeur (1), et où le fonctionnement desdits moyens de chauffage (12) et/ou de refroidissement (11) est une fonction des signaux reçus par lesdits un ou plusieurs terminaux mobiles (3) qui sont présents dans l'intervalle de fonctionnement et en fonction des données de l'utilisateur.
